# EUROPEAN PATENT SPECIFICATION

(11) **EP 4 325 528 B1**
(45) Date of publication and mention of the grant of the patent: **09.04.2025**
(21) Application number: 22191031.8
(22) Date of filing: 18.08.2022
(51) Int. Cl.: H01B 7/288

(54) **DYNAMIC POWER CABLE ARRANGEMENT WITH MOISTURE INGRESS DETECTION DEVICE**
DYNAMISCHE STROMKABELANORDNUNG MIT FEUCHTIGKEITSEINTRITTSDETEKTIONSVORRICHTUNG
AGENCEMENT DE CÂBLE D'ALIMENTATION DYNAMIQUE AVEC DISPOSITIF DE DÉTECTION D'ENTRÉE D'HUMIDITÉ

(43) Date of publication of application: 21.02.2024
(73) Proprietor: Nexans, 92400 Courbevoie (FR)
(72) Inventor: JOHANSON, Audun, 0653 Oslo (NO); GASPARI, Roberto, 1182 Oslo (NO); BENGTSSON, Karl Magnus, 0687 Oslo (NO)
(74) Representative: Onsagers AS

(56) References cited:
- WO-A1-2020/211319
- CN-A- 105 259 626
- US-A1- 2014 102 190

## Description

### Background of the invention

Submarine power cables, and in particular Dynamic Power Cables, are known and described for example in EP3438993.

As mentioned therein, submarine power cables utilize a water barrier layer to keep critical components in the interior of the cable dry. The water barrier layer should completely block convection or diffusion of water, as an ingress of moisture can ultimately lead to a failure of the cable. As used herein, the terms "water" and "moisture" may be used interchangeably.

In the event that the water barrier layer fails, and water is able to enter into the cable, it is difficult to identify the precise location of the failure, given the often-times great length of the cables. This is particularly challenging in the case of submarine cables which cannot be easily inspected visually. It is therefore desirable to be able to detect and localize the point of ingress of water or moisture. It is also often the case that an occurrence of ingress of water is only first recognized when the cable fails. It is therefore further desirable to detect an ingress of water quickly, so that corrective measures may be taken before failure of the cable. Knowing the water penetration position limits the time to repair (typically 50% of repair time is due to searching the fault) with faster return to operation of the energy assets.

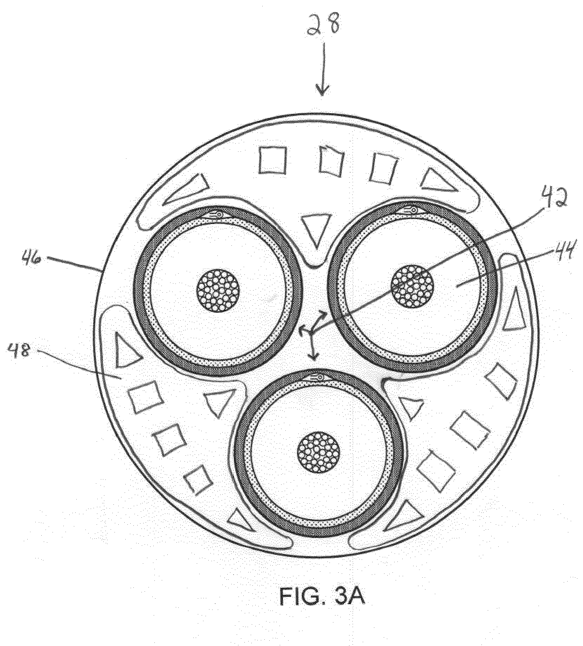

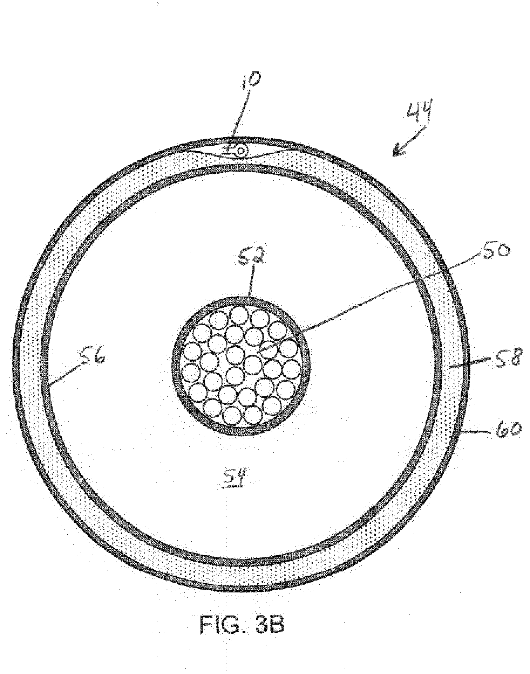

It is known to utilize an optical fiber arrangement to detect ingress of moisture into an electrical power cable past a water barrier layer. WO2020/211319 describes an arrangement where an optical fiber is wrapped with a water-swellable material, with the wrapped optical fiber placed in the interior of an elongated, rigid or semi-rigid, water permeable, cylindrical sheath. Figs 3, 4 and 5 show the cylindrical sheath arranged in interstices of a cable, interior to a water barrier layer. In the event water gets past the barrier layer, the water will diffuse to the interior of the cable, where it will enter the rigid sheath, causing the swellable material to expand. As described therein, the rigid sheath is necessary to direct the pressure of the expanding material inwards towards the optical fiber, which then becomes squeezed by the pressure of the expanding material. The site of the resulting deformation of the optical fiber can be localized by means known in the art of optical fibers, by observing attenuation and propagation characteristics of the optical fiber.

Likewise, CN105259626 describes a moisture ingress detection device comprising an optical fiber wrapped with a water-swellable material, with the wrapped optical fiber placed in the interior of an elongated, rigid or semi-rigid, water permeable, cylindrical sheath. This publication does not disclose that the device is arranged inside a cable, but rather is utilized to detect moisture in buildings or other structures. As with WO2020/211319, this publication describes the rigid, cylindrical sheath as necessary to direct the pressure of the expanding swellable material inwards towards the optical fiber.

While perhaps effective at detecting moisture, the devices described in WO2020/211319 and CN105259626 cannot be effectively used in a dynamic power cable. As described in EP3438993, a dynamic submarine power cable, a term of art known to those skilled in the art of submarine cables, is one that is subject to mechanical loads imposed during dynamic movement of the cable from wave motions and underwater currents. Such cables are often suspended from offshore structures, such as oil wells or wind power installations. The desired lifetime of a submarine cable is often from 10-50 years, therefore the components of a dynamic cable must be able to withstand sustained exposure to such mechanical loads for long periods of time.

One of the critical components for maintaining the structural integrity of a dynamic submarine power cable is the water barrier layer. A conventional water layer barrier is typically manufactured by a continuous or discontinuous extrusion of a seamless tube, often comprising lead or a lead alloy due to its extrudability and ductility. Such lead water barriers are not optimal for dynamic power cables, however, since lead possesses low fatigue resistance, and is therefore not well suited to the mechanical loads imposed on a subsea dynamic power cable by the cyclic movement of wave motions and underwater currents. EP3438993 thus describes alternate materials and alloys suitable for manufacturing water barrier layers for a dynamic power cable. Common among them, however, is the need to tightly arrange the water layer barrier about an underlying intermediate layer in a highly compressed manner, to provide structural rigidity to the cable in the face of high pressure and dynamic forces. Such underlying intermediate layer is often a buffer layer between the cable core and the water barrier constituting a rubber layer, swellable tape or pre-impregnated tape which include a material with higher viscosity compared to the tape. Ideally the buffer layer will comprise a dominating fraction of high bulk modulus material.

In order to be most effective, it would be desirable to arrange a moisture ingress detection device as close as possible to, and preferably in direct contact with, the water barrier layer. Water passing through the layer could then be detected more quickly and precisely. If such a device is arranged in interstices further to the interior of the cable, as is the case with the devices described in WO2020/211319 and CN105259626 it will take time for the water to diffuse to the device, and the water may travel longitudinally away from the point of ingress before encountering the device. The devices described in WO2020/211319 and CN105259626 are however not suitable to be arranged adjacent to a tightly arranged, highly compressed barrier layer in a dynamic cable. The rigid cylindrical sheath disclosed in these references would cause a deformity or bulging of the water barrier layer that could negatively impact the rigidity and structural integrity of the layer. There is therefore a need for a moisture detecting device that may be arranged in the tight, compressed space between a water barrier layer and an underlying layer in a dynamic power cable.

### Summary of the invention

The present invention provides a cable arrangement comprising a moisture ingress detection device. The cable in which the moisture ingress detection device is arranged is preferably a submarine dynamic power cable, but one skilled in the art will recognize that the moisture ingress detection device may advantageously also be utilized with other cable designs, for example static submarine cables or other cables having a tightly arranged water barrier layer.

As used herein the following terms have the following definitions:
- Dynamic submarine cable: A submarine power cable specifically designed and engineered to withstand multiple year exposure to hydrodynamic loads from wave and current motion. Such cables are often suspended from an offshore structure such as a petroleum installation, and more recently offshore wind power installations. An example of a standard alternating current dynamic power cable comprises a power core with three copper conductors that will be exposed to fatigue. Dynamic submarine power cables further comprise a metallic water barrier layer, arranged to provide structural integrity to the cable in the face of dynamic loads and high water pressure. An example of a dynamic power cable comprises a water barrier layer composed of a non-lead containing alloy, due to the limited ability of lead-containing water barrier layers to withstand the hydrodynamic loads such cables are intended to experience. An example of such a non-lead containing water barrier layer is a layer comprising a CuNi alloy.
- Static submarine cable: A submarine cable intended for use where the cable has limited exposure to hydrodynamic loads, such as a cable intended for installation along the sea floor. Such cables also typically comprise a water barrier layer, but since the cable is not expected to be exposed to relatively significant hydrodynamic loads, the water barrier layer is often comprised of a lead or lead alloy material.
- "Tightly arranged", in the context of the manufacture of a water barrier layer in a submarine cable: The manufacturing of the water barrier layer in a submarine cable so that the water barrier layer is sufficiently compressed about an underlying layer so as to impart structural rigidity/stability in order to maintain structural integrity of the cable in the face of expected hydrodynamic loads and/or water pressure. The water barrier layer may be arranged by wrapping, extruding or other known means for arranging a cable layer.

According to one aspect, the present invention provides a moisture ingress detection device comprising an elongated optical fiber of the type known in the art, surrounded by a water-swellable material. Optical fibers of this type typically comprise a glass filament surrounded by one or more protective acrylate layers. According to one aspect, the water-swellable material is a water-swellable tape.

According to another aspect, the invention provides a cable arrangement in which the moisture ingress detection device of the invention is installed immediately to the interior of, and in direct contact with, a tightly arranged water barrier layer of a submarine cable, between the water barrier layer and a next adjacent intermediate layer of the cable, and in a manner that avoids abrupt bulging of the water barrier layer that could otherwise negatively impact the structural integrity of the cable. The moisture detecting device is arranged such that, if water or moisture passes the water barrier layer, the swellable material will expand and exert pressure on the optical fiber, squeezing and deforming the fiber. The location of the pressure and/or deformity (and thereby the location of moisture ingress) can be localized by techniques known in the art of fiber optic cables by observing attenuation and propagation characteristic of the optical fiber. The cable arrangement of the invention thus further comprises equipment known in the art to propagate and observe signals though the optical fiber. Because the moisture ingress detection device is arranged in direct contact with the water barrier layer, the sensitivity of the device is optimized, as the device does not rely on water diffusing further into the interior of the cable.

In one embodiment, in contrast to the prior art, the optical fiber and surrounding water-swellable material does not utilize a surrounding rigid or semi-rigid sheath to direct pressure from the expanding swellable material towards the optical fiber. Rather, the moisture detecting device relies on the tightness of the wrapping of the water barrier layer about the next adjacent layer to provide the necessary constriction to direct the pressure of the expanding material inward towards the fiber. According to one aspect of this embodiment, a water-swellable tape may be arranged about the optical fiber by folding the tape along its longitudinal axis, or by sandwiching the optical fiber between two layers of tape. Edges of the tape may be closed by an adhesive or by stitching or by other appropriate sealing means. This embodiment of the moisture ingress detection device, having no outer rigid sheath, will therefore be thin enough to avoid any abrupt bulging of the water barrier layer.

In another embodiment, the optical fiber with surrounding swellable material is arranged in an improved pressure-directing sheath, designed to prevent the device from causing an abrupt bulging in the water barrier layer. The improved sheath of this embodiment is in the form of an elongated, shape-following guide element having one or more passages in which the moisture detecting device is arranged. The shape-following guide element has a cross-sectional shape adapted to follow the curvature of the water barrier layer, and tapers from a lateral midpoint of maximum thickness to narrower lateral ends. The shape-following guide element thus disperses the width of the moisture ingress detection device gradually about a portion of the circumference of the water barrier layer in order to avoid an abrupt bulging of the water barrier layer. According to one aspect, the shape-following guide element is made of an elastic material, for example rubber or a synthetic material with similar elastic properties, such that the guide element bends to follow the curvature of the water barrier layer. As is the case with the previously described embodiment, the moisture ingress detection device is arranged in direct contact with the water barrier layer, in this instance with the shape-following guide element of the device being in contact with the water barrier layer. While this embodiment requires moisture to diffuse though that material of the guide element to reach the optical fiber, this embodiment nonetheless optimizes sensitivity by its immediate proximity to the water barrier layer, made possible by the shape-conforming material of the guide element.

According to one aspect, the invention comprises:
A power cable arrangement, comprising a power core comprising one or more conductors, an intermediate layer disposed about the power core, a water barrier layer tightly arranged about the intermediate layer, and a moisture ingress detection device arranged between the water barrier layer and the intermediate layer in direct contact with the water barrier layer, the moisture ingress detection device comprising an elongated optical fiber surrounded by a water-swellable material, the swellable material arranged to expand upon contact with moisture and exert a pressure on the underlying optical fiber sufficient to cause an observable change in the attenuation and/or propagation characteristics of the optical fiber.

A method for detecting the ingress of moisture into a submarine cable having a water barrier layer is also provided. The method comprises the steps of providing a power cable arrangement according to the invention and monitoring the optical fiber for changes in propagation and/or attenuation characteristics indicative of a localized deformation of the optical fiber. Changes in propagation and/or attenuation are indicative of a localized deformation of the optical fiber.

### Brief description of the drawings

Figs 1A and 1B are cross sectional views of an embodiment of the moisture ingress detection device for use in the absence of an outer sheath.
Figs 2A and 2B are cross sectional views of an alternative embodiment of the moisture ingress detection device for use in the absence of an outer sheath.
Figs. 3A and 3B are cross sectional views of a cable arrangement comprising the moisture ingress detection device of either Figs 1 or 2.
Fig. 4A and 4B are perspective views of a portion of a moisture ingress detection device comprising an optical fiber arranged in a passage in an elongated, shape-following guide element.
Figs. 5A, 5B and 5C are cross sectional view of different embodiments of the shape-following guide element.
Figs. 6A and 6B are cross sectional views of a cable arrangement comprising the moisture ingress detection device from Fig. 4.

### Detailed description of the invention

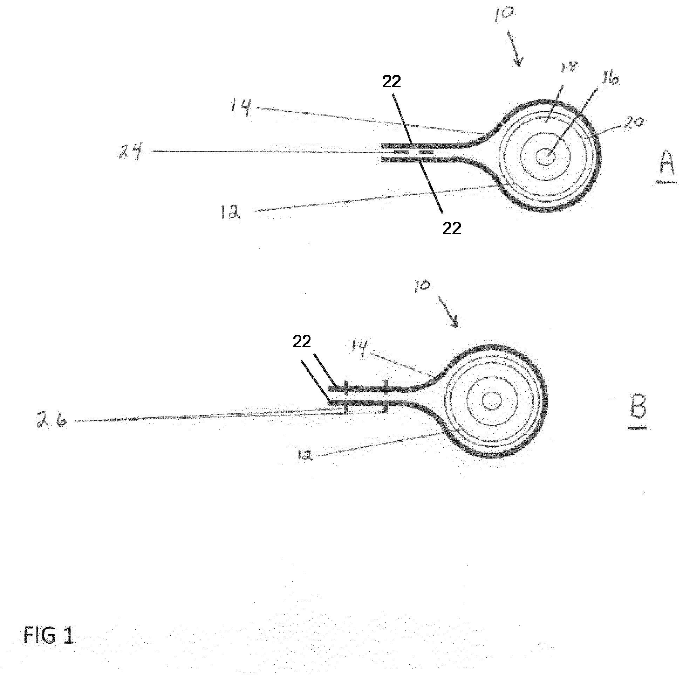

Figs 1A and 1B illustrate a first embodiment of a moisture ingress detection device 10, for use in a cable arrangement illustrated in Fig 3 in which no outer, pressure-directing sheath is employed. An optical fiber 12 is surrounded by a length of water-swellable tape 14 folded along its longitudinal axis. Optical fiber 12 comprises a glass filament 16, surrounded by a first acrylate layer 18 and a second acrylate layer 20. Edges 22 of tape 14 are sealed, by an adhesive 24 as shown in Fig 1A, or by stitching 26 as shown in Fig 1B.

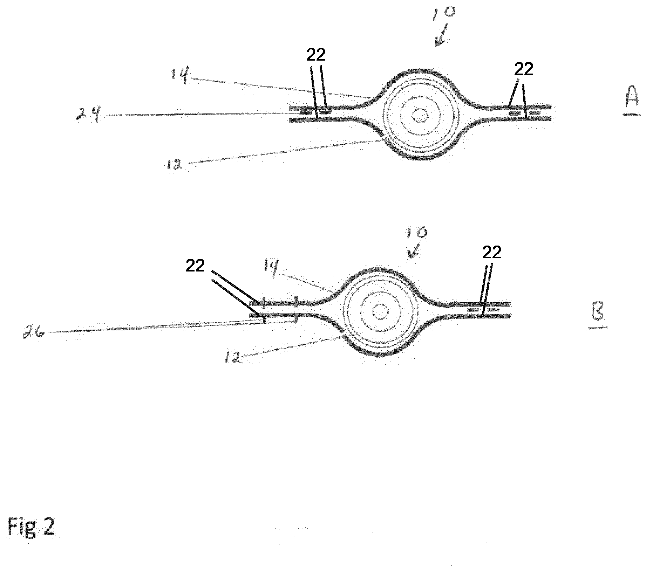

Figs 2A and 2B illustrate a second embodiment of a moisture ingress detection device 10, for use in a cable arrangement illustrated in Fig 3 in which no outer, pressure-directing sheath is employed.

According to this embodiment, an optical fiber 12 is sandwiched between two pieces of swellable tape 14, the edges 22 of which are sealed by adhesive 24 or stitching 26.

Figs 3A and 3B illustrates a submarine cable arrangement 28, comprising the moisture ingress detection device 10 of Fig 1. The device 10 of Fig 2 would be arranged in a similar fashion. As shown, cable arrangement 28 comprises a power core 42 comprising one or more conductors 44. The power core is arranged in an external sheath 46, with interstices between conductors occupied by filler elements 48. It should be noted that the illustrated arrangement is simplified, as a power cable arrangement may comprise additional layers and structures not illustrated, such as armor layers, signal carrying cables, various insulations layers etc.

Conductor 44 is illustrated in more detail in Fig 3B. As shown, conductor 44 comprises a copper conductor element 50 surrounded by a first semiconductor layer 52. Outside the first semiconductor layer 52 is a layer of insulation 54. Arranged about the insulation layer 54 is a second semiconductor layer 56. Arranged outside the second semiconductor 56 is an intermediate layer 58. Intermediate layer 58 according to one aspect of the invention is a buffer layer between the cable core and the water barrier comprising a rubber layer, swellable tape or pre-impregnated tape which include a material with higher viscosity compared to the tape. Ideally the buffer layer will comprise a dominating fraction of high bulk modulus material. Tightly arranged about the intermediate layer 58 is a metallic water barrier layer 60. According to one aspect of the invention the cable arrangement is a dynamic submarine power cable and the water barrier layer is made of a CuNi alloy.

As further shown in Fig 3B, a moisture detection device 10, as illustrated in Fig 1 or Fig 2, is arranged between the water barrier layer 60 and intermediate layer 58. Because water barrier layer 60 is tightly arranged (as that term was previously defined), moisture detection device 10 will be firmly engaged and constricted between the water barrier layer and the intermediate layer. While the drawing illustrates device 10 in an indented pocket in the intermediate layer, the actual constriction of the device may be more linear or shape conforming depending upon the rigidity of the material of the intermediate layer.

In the event the water barrier 60 were to leak, moisture would diffuse along the interface between the water barrier layer and the intermediate layer (or through the material of the intermediate layer itself) until it contacts the water-swellable material of the detection device, causing the swellable material to expand. Because of the constriction of the device caused by the tight arrangement of the water barrier layer, the expanding swellable material will exert pressure on the underlying optical fiber, causing a deformation that can be observed and located according to techniques known in the art of optical fiber signal transmission.

As can be seen, in Fig 3B, because no external rigid sheath is used in the embodiments of the moisture ingress detection device 10 illustrated in Figs 1 and 2, the moisture ingress detection device is, according to one aspect of the invention, arranged such that the water-swellable tape 14 is immediately adjacent to, and in direct contact with, water barrier layer 60. This direct contact improves the sensitivity of the moisture ingress detection device as the swellable tape will be able to quickly react to ingress of moisture without the need to rely on diffusion of the moisture further into the interior of the cable. Furthermore, the relatively thin cross-sectional profile of the embodiments from Figs 1 and 2 do not cause a bulging of the water barrier layer that can negatively impact the structural integrity of the cable. In other words, the relative thickness of the moisture ingress detection device compared to the circumference of the water barrier layer is such that no integrity-degrading bulging is caused in the water barrier layer.

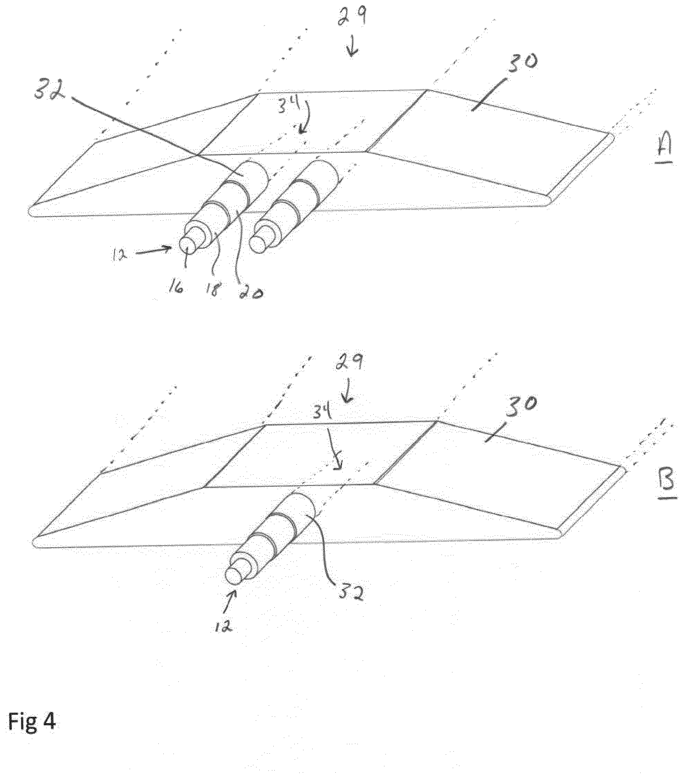

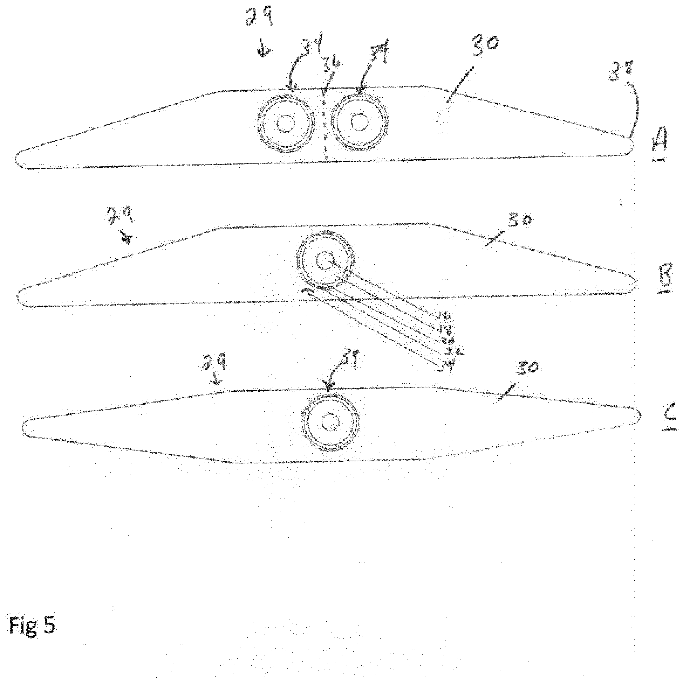

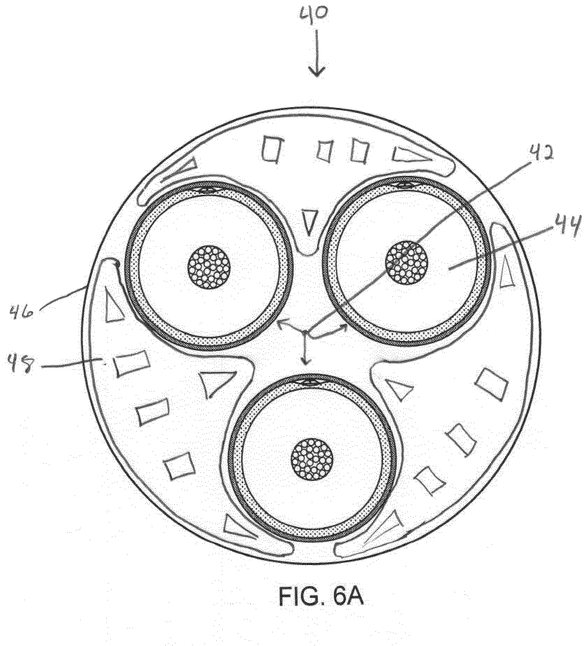

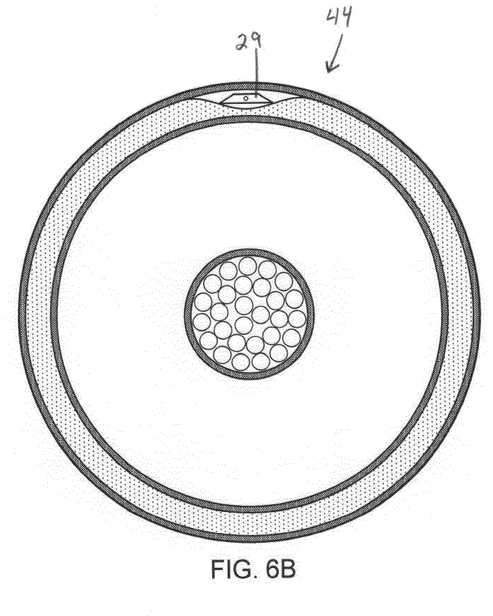

Figs 4 and 5 illustrate a third embodiment of the moisture ingress detection device, identified as moisture ingress detection device 29, comprising an optical fiber 12, surrounded by a swellable material 32, arranged in an elongated, shape-following guide element 30, for use in a cable arrangement illustrated in Fig 6. The optical fiber 12, as described above, typically comprises a glass filament 16, surrounded by first and second acrylate layers 18 and 20.

According to this embodiment of moisture ingress detection device 29, optical fiber 12 with surrounding swellable material 32 is arranged in one or more passages 34 in shape-following guide element 30, the passages dimensioned to directed pressure from expansion of the swellable material towards the optical fiber. Fig 4A shows an alternative with two passages 34, while Fig 4B shows an alternative with a single passage 34.

As shown in Fig 5, shape-following guide element 30 has a cross-sectional shape with a lateral midpoint 36 of maximum thickness, tapering to lateral ends 38 having a thickness less than the midpoint 36. According to one aspect, shape-following guide element 30 is made of an elastic material, such as rubber or a synthetic material with similar elastic properties.

Fig 6A illustrates a cable arrangement 40 having the same construction as the cable arrangement from Fig 3, except that the moisture detection device that is utilized is the embodiment 29 from Figs 4 and 5. Fig 6B shows a detailed view of a conductor 44, again having the same construction as the conductor shown in Fig 3B, with the device 29 again being the device illustrated in Figs 4 and 5. As shown, the shape following guide element 30 is arranged between metallic water barrier 60 and intermediate layer 58, preferably in direct contact with water barrier 60. In this instance the constriction required to direct pressure from expanding water-swellable material toward the optical fiber is provided by passages 34, alone or in combination with the tight arrangement of the water barrier layer about the intermediate layer.

When installed between the tightly arranged water barrier layer and the next adjacent intermediate layer, the elastic material of the shape-following guide element 30 will bend to conform to the curvature of the water barrier layer. The material of guide element 30 is preferably water permeable, such that moisture that passes the water barrier layer may diffuse though the material to the optical fiber 12 within passage 34. Alternatively, openings could be provided from the exterior of shape-following guide element 30 to the interior of passages 34.

As is the case with the embodiment in Fig 3, the cable arrangement 40 shown in Fig 6B comprises moisture ingress detection device 29 arranged between the tightly arranged water barrier layer and the next adjacent intermediate layer, preferably in direct contact with the water barrier layer in order to optimize the sensitivity of the moisture ingress detection device 29. Whereas the embodiment shown in Fig 3A has the swellable tape 14 in direct contact with the water barrier layer, in the embodiment shown in Fig 6B the shape-following guide element 30 of moisture ingress detection device 29 will preferably be in direct contact with the water barrier layer. In a similar fashion however, the arrangement of moisture ingress detection device 29 in direct contact with the water barrier layer improves the sensitivity of the moisture ingress detection device, albeit the embodiment shown in Fig 6B does require moisture to diffuse through guide element 30 before encountering the swellable material 32. Shape-following guide element 30 bends to conform to the curvature of the water barrier layer, and the tapering cross section of shape-following guide element 30 spreads the thickness of the guide element gradually over a portion of the circumference of the water barrier layer to avoid causing a bulging of the water barrier layer that could otherwise negatively impact the structural integrity of the cable.

Both Figs 3B and 6B illustrate a single moisture detection device 10, 29 arranged about the circumference of the conductor, however a plurality of detection devices may be arranged about the circumference.

## Claims

1. A power cable arrangement (28, 40), comprising a power core (42) comprising one or more conductors (44), an intermediate layer (58) disposed about the power core, a water barrier layer (60) tightly arranged about the intermediate layer, and a moisture ingress detection device (10, 29) arranged between the water barrier layer and the intermediate layer in direct contact with the water barrier layer (60) , the moisture ingress detection device (10, 29) comprising an elongated optical fiber (12) surrounded by a water-swellable material (14,32), the water-swellable material arranged to expand upon contact with moisture and exert a pressure on the underlying optical fiber sufficient to cause an observable change in the attenuation and/or propagation characteristics of the optical fiber.

2. A power cable arrangement according to claim 1, wherein a relative thickness of the moisture ingress detection device (10, 29) compared to the circumference of the water barrier layer(60) is such that no integrity-degrading bulging is caused in the water barrier layer by the moisture ingress detection device.

3. A power cable arrangement according to one of the preceding claims, wherein the power cable is a dynamic submarine power cable.

4. A power cable arrangement according to one of the preceding claims, wherein the water swellable material (14) of the moisture ingress detection device (10) is in direct contact with the water barrier layer (60), and further wherein the pressure caused by expansion of the swellable material is directed towards the optical fiber due to the tightness of the arrangement of the water barrier layer about the intermediate layer.

5. A power cable arrangement according to claim 4, wherein the swellable material is a swellable tape (14).

6. A power cable arrangement according to claim 5, wherein a length of swellable tape (14) is folded along its longitudinal axis about the optical fiber (12).

7. A power cable arrangement according to claim 5, wherein the optical fiber is sandwiched between two segments of swellable tape (14).

8. A power cable arrangement according to one of claims 1-3, wherein the moisture ingress detection device (29) comprises an elongated shape-following guide element (30) having one or more passages (34) in which is arranged swellable material-wrapped optical fiber (12), the shape following guide element being in direct contact with the water barrier layer (60) and having a shape adapted conform to the curvature of the water barrier layer.

9. A power cable arrangement according to claim 8, wherein shape-following guide element (30) has a cross-sectional shape that tapers from a lateral midpoint (36) of maximum thickness to narrower lateral ends (38), the shape-following guide element (30) being made of an elastic material adapted to bend to conform to the curvature of the water barrier layer.

10. A power cable arrangement according to claim 8, wherein the elastic material is water permeable.

11. A method for detecting the ingress of moisture into a submarine cable having a water barrier layer (60), comprising the steps of:
a. providing a power cable arrangement according to any one of claims 1-10,
b. monitoring the optical fiber (12) for changes in propagation and/or attenuation characteristics indicative of a localized deformation of the optical fiber.

## Patentansprüche

1. Stromkabelanordnung (28, 40), umfassend einen Stromkern (42), umfassend einen oder mehrere Leiter (44), eine Zwischenschicht (58), die um den Stromkem angeordnet ist, eine Wassersperrschicht (60), die dicht um die Zwischenschicht angeordnet ist, und eine Feuchtigkeitseintrittsdetektionsvorrichtung (10, 29), die zwischen der Wassersperrschicht und der Zwischenschicht in direktem Kontakt mit der Wassersperrschicht (60) angeordnet ist, wobei die Feuchtigkeitseintrittsdetektionsvorrichtung (10, 29) eine längliche optische Faser (12) umfasst, die durch ein wasserquellbares Material (14,32) umgeben ist, wobei das wasserquellbare Material angeordnet ist, um sich bei Kontakt mit Feuchtigkeit auszudehnen und einen Druck auf die darunterliegende optische Faser auszuüben, der ausreicht, um eine beobachtbare Änderung der Dämpfungs- und/oder Ausbreitungseigenschaften der optischen Faser zu bewirken.

2. Stromkabelanordnung nach Anspruch 1, wobei eine relative Dicke der Feuchtigkeitseintrittsdetektionsvorrichtung (10, 29), verglichen mit dem Umfang der Wassersperrschicht (60), derart ist, dass keine Integrität beeinträchtigende Ausbauchung in der Wassersperrschicht durch die Feuchtigkeitseintrittsdetektionsvorrichtung bewirkt wird.

3. Stromkabelanordnung nach einem der vorhergehenden Ansprüche, wobei das Stromkabel ein dynamisches Seestromkabel ist.

4. Stromkabelanordnung nach einem der vorhergehenden Ansprüche, wobei das wasserquellbare Material (14) der Feuchtigkeitseintrittsdetektionsvorrichtung (10) in direktem Kontakt mit der Wassersperrschicht (60) ist, und wobei ferner der Druck, der durch Ausdehnung des quellbaren Materials bewirkt wird, auf die optische Faser aufgrund der Dichtheit der Anordnung der Wassersperrschicht um die Zwischenschicht gerichtet ist.

5. Stromkabelanordnung nach Anspruch 4, wobei das quellbare Material ein quellbares Band (14) ist.

6. Stromkabelanordnung nach Anspruch 5, wobei eine Länge von quellbarem Band (14) entlang seiner Längsachse um die optische Faser (12) gefaltet ist.

7. Stromkabelanordnung nach Anspruch 5, wobei die optische Faser zwischen zwei Segmenten eines quellbaren Bandes (14) eingefügt ist.

8. Stromkabelanordnung nach einem der Ansprüche 1-3, wobei die Feuchtigkeitseintrittsdetektionsvorrichtung (29) ein längliches formfolgendes Führungselement (30) umfasst, das einen oder mehrere Durchgänge (34) aufweist, in denen quellbare, mit Material umwickelte optische Faser (12) angeordnet ist, wobei das formfolgende Führungselement in direktem Kontakt mit der Wassersperrschicht (60) ist und eine Form aufweist, die entsprechend der Krümmung der Wassersperrschicht angepasst ist.

9. Stromkabelanordnung nach Anspruch 8, wobei das formfolgende Führungselement (30) eine Querschnittsform aufweist, die sich von einem seitlichen Mittelpunkt (36) mit maximaler Dicke zu schmaleren seitlichen Enden (38) verjüngt, wobei das formfolgende Führungselement (30) aus einem elastischen Material hergestellt ist, das angepasst ist, um sich zu biegen, um der Krümmung der Wassersperrschicht zu entsprechen.

10. Stromkabelanordnung nach Anspruch 8, wobei das elastische Material wasserdurchlässig ist.

11. Verfahren zum Detektieren des Eintritts von Feuchtigkeit in ein Seekabel mit einer Wassersperrschicht (60), umfassend die folgenden Schritte:
a. Bereitstellen einer Stromkabelanordnung nach einem der Ansprüche 1-10,
b. Überwachen der optischen Faser (12) auf Änderungen der Ausbreitungs- und/oder Dämpfungseigenschaften, die eine lokalisierte Verformung der optischen Faser angeben.

## Revendications

1. Agencement de câble d'alimentation (28, 40), comprenant un noyau d'alimentation (42) comprenant un ou plusieurs conducteurs (44), une couche intermédiaire (58) disposée autour du noyau d'alimentation, une couche de barrière contre l'eau (60) agencée étroitement autour de la couche intermédiaire, et un dispositif de détection d'entrée d'humidité (10, 29) agencé entre la couche de barrière contre l'eau et la couche intermédiaire en contact direct avec la couche de barrière contre l'eau (60), le dispositif de détection d'entrée d'humidité (10, 29) comprenant une fibre optique allongée (12) entourée d'un matériau gonflable à l'eau (14, 32), le matériau gonflable à l'eau étant agencé pour se dilater au contact d'humidité et exercer une pression sur la fibre optique sous-jacente suffisante pour entraîner un changement observable dans les caractéristiques d'atténuation et/ou de propagation de la fibre optique.

2. Agencement de câble d'alimentation selon la revendication 1, dans lequel une épaisseur relative du dispositif de détection d'entrée d'humidité (10, 29) comparée à la circonférence de la couche de barrière contre l'eau (60) est de sorte qu'aucun renflement dégradant l'intégrité n'est entraîné dans la couche de barrière contre l'eau par le dispositif de détection d'entrée d'humidité.

3. Agencement de câble d'alimentation selon l'une des revendications précédentes, dans lequel le câble d'alimentation est un câble d'alimentation sous-marin dynamique.

4. Agencement de câble d'alimentation selon l'une des revendications précédentes, dans lequel le matériau gonflable à l'eau (14) du dispositif de détection d'entrée d'humidité (10) est en contact direct avec la couche de barrière contre l'eau (60), et en outre dans lequel la pression entraînée par la dilatation du matériau gonflable est dirigée vers la fibre optique en raison de l'étroitesse de l'agencement de la couche de barrière contre l'eau autour de la couche intermédiaire.

5. Agencement de câble d'alimentation selon la revendication 4, dans lequel le matériau gonflable est un ruban gonflable (14).

6. Agencement de câble d'alimentation selon la revendication 5, dans lequel une longueur de ruban gonflable (14) est repliée le long de son axe longitudinal autour de la fibre optique (12).

7. Agencement de câble d'alimentation selon la revendication 5, dans lequel la fibre optique est prise en sandwich entre deux segments de ruban gonflable (14).

8. Agencement de câble d'alimentation selon l'une des revendications 1 à 3, dans lequel le dispositif de détection d'entrée d'humidité (29) comprend un élément de guidage allongé à suivi de forme (30) comportant un ou plusieurs passages (34) où est agencée une fibre optique (12) enveloppée de matériau gonflable , l'élément de guidage à suivi de forme étant en contact direct avec la couche de barrière contre l'eau (60) et comportant une forme adaptée à la courbure de la couche de barrière contre l'eau.

9. Agencement de câble d'alimentation selon la revendication 8, dans lequel l'élément de guidage à suivi de forme (30) comporte une forme en coupe transversale qui se rétrécit à partir d'un point médian latéral (36) d'épaisseur maximale vers des extrémités latérales plus fines (38), l'élément de guidage à suivi de forme (30) étant constitué d'un matériau élastique adapté pour se plier pour se conformer à la courbure de la couche de barrière contre l'eau.

10. Agencement de câble d'alimentation selon la revendication 8, dans lequel le matériau élastique est perméable à l'eau.

11. Procédé destiné à détecter l'entrée d'humidité dans un câble sous-marin comportant une couche de barrière contre l'eau (60), comprenant les étapes de :
a. fourniture d'un agencement de câble d'alimentation selon l'une quelconque des revendications 1 à 10,
b. surveillance de la fibre optique (12) pour détecter des changements dans des caractéristiques de propagation et/ou d'atténuation indiquant une déformation localisée de la fibre optique.
